## Europäisches Patentamt
## European Patent Office
## Office européen des brevets

(19)

(11) Numéro de publication: **0 249 572**
**B1**

(12) **FASCICULE DE BREVET EUROPEEN**

(45) Date de publication du fascicule du brevet: **30.05.90**

(51) Int. Cl.⁵: **A 47 J 27/08**

(21) Numéro de dépôt: **87440032.8**

(22) Date de dépôt: **02.06.87**

(54) **Appareil de cuisson pour cuisines de collectivités.**

(30) Priorité: **06.06.86 FR 8608325**

(43) Date de publication de la demande:
**16.12.87 Bulletin 87/51**

(45) Mention de la délivrance du brevet:
**30.05.90 Bulletin 90/22**

(84) Etats contractants désignés:
**AT BE CH DE ES GB GR IT LI LU NL SE**

(56) Documents cités:
**DE-U-8 520 535**
**FR-A- 421 920**
**FR-A-1 527 166**
**FR-A-1 543 245**
**GB-A-2 080 143**
**US-A-2 688 322**

(73) Titulaire: **R. FRITSCH S.A. Société Anonyme dite:**
**Zone Industrielle Centre de Gros 4, rue de la Charente**
**F-68270 Wittenheim (FR)**

(72) Inventeur: **Fritsch, Norbert**
**4 rue de la Charente**
**F-68270 Wittenheim (FR)**
Inventeur: **Fritsch, Edgar**
**4 rue de la Charente**
**F-68270 Wittenheim (FR)**

(74) Mandataire: **Aubertin, François**
**Cabinet Lepage & Aubertin Innovations et Prestations 4, rue de Haguenau**
**F-67000 Strasbourg (FR)**

EP 0 249 572 B1

Courier Press, Leamington Spa, England.

## Description

L'invention a trait à un appareil de cuisson pour cuisines de collectivités comprenant, entre autres, une cuve de cuisson et un couvercle rabattable actionné par un mécanisme de commande et pourvu de moyens de mise sous vide et de moyens de mise sous pression de la cuve de cuisson.

Pour conserver au maximum la valeur nutritive de certains aliments, il est parfois souhaitable de procéder à une cuisson, soit à des températures supérieures, soit à des températures inférieures à 100 degrés Celsius. Pour la cuisson à température inférieure à 100 degrés Celsius, on préconise la cuisson sous vide des aliments en vrac alors que pour la cuisson à température supérieure à 100 degrés Celsius, on accélère la cuisson longue en procédant à une cuisson sous pression.

Ainsi, dans les cuisines de collectivités, on utilise deux appareils de cuisson distincts, l'un pour la cuisson sous vide des aliments en vrac, et l'autre pour la cuisson sous pression. Cependant, ce double équipement présente non seulement une augmentation du coût de l'installation de cet équipement double mais il faut prévoir également des locaux en conséquence.

Par ailleurs, on connaît déjà, par le document GB—A—2 080 143, un appareil de cuisson comportant simultanément des moyens de mise sous vide et des moyens de mise sous pression du récipient dans lequel sont introduits les aliments. Cet appareil de cuisson reprend, de manière sensiblement identique, les caractéristiques d'un autocuiseur habituellement utilisé pour les cuissons sous pression. De ce fait, il est formé d'un récipient refermé par un couvercle amovible pourvu de deux orifices dont l'un communique avec les moyens de mise sous vide et dont l'autre coopère avec les moyens de mise sous pression dudit récipient. Les moyens de mise sous vide sont constitués par un élément tubulaire en forme d'un "T" solidaire du couvercle et dont une branche est rendue communicante avec le volume intérieur du récipient. Les extrémités des deux autres branches de cet élément tubulaire en forme de "T" comportent, respectivement, un manomètre à mercure servant à la mesure du vide régnant dans le récipient et un robinet à tiroir. Sur ce dernier peut être branchée une pompe à vide, celle-ci étant constituée par un venturi relié à un robinet d'eau. En ce que concerne les moyens de mise sous pression du récipient, ceux-ci sont formés par un dispositif de sécurité coopérant avec l'autre orifice pratiqué dans le couvercle amovible et permettant de limiter la pression à l'intérieur du récipient.

Cet appareil de cuisson présente un certain nombre d'inconvénients résultant essentiellement des problèmes d'étanchéité au niveau du couvercle amovible. En effet, ce dernier présente nécessairement deux orifices pour la mise en place des moyens de mise sous pression et des moyens de mise sous vide du récipient. En démultipliant ainsi le nombre d'ouvertures pratiquées dans le couvercle amovible, la fiabilité du fonctionnement de l'appareil de cuisson est considérablement diminuée. Or, il est à remarquer que, dans le cas d'une infiltration d'air à l'intérieur du récipient lors d'une cuisson sous vide, il se produit une remontée de la température détruisant la qualité nutritive de certains aliments. Par ailleurs, une pression non maintenue à l'intérieur du récipient en cas de cuisson sous pression augmente considérablement le temps de cette dernière.

La présente invention a pour but de remédier à l'ensemble des inconvénients précités et à cette fin l'appareil de cuisson pour cuisines de collectivités conforme à l'invention comprenant, entre autres, une cuve de cuisson et un couvercle rabattable, actionné par un mécanisme de commande et pourvu de moyens de mise sous vide et de moyens de mise sous pression de la cuve de cuisson, est caractérisé en ce que ledit couvercle rabattable comporte un conduit d'évacuation unique débouchant, d'une part, à son extrémité inférieure dans la cuve de cuisson et, d'autre part, à son extrémité supérieure dans des moyens de sélection de mise sous vide ou sous pression de la cuve de cuisson constitués par un élément fixe traverse par le conduit et solidaire du dessus du couvercle rabattable et coopérant avec un élément mobile permettant la mise en correspondance sélective du conduit, soit avec les autres moyens de mise sous vide, soit avec les moyens de mise sous pression, ces derniers étant munis d'un clapet de sécurité.

Selon un premier mode d'exécution préférentiel, l'élément mobile est un disque soumis à un mouvement de rotation.

Selon un autre mode d'exécution, l'élément mobile est une tiroir soumis à un mouvement rectiligne.

Les avantages obtenus grâce à cette invention consistent essentiellement en ceci que le couvercle rabattable ne présente qu'un seul alésage dans lequel est inséré un conduit d'évacuation communiquant directement avec les moyens de sélection de mise sous vide ou sous pression de la cuve de cuisson. Il en résulte une meilleure étanchéité de l'appareil de cuisson, d'où une fiabilité accrue de son fonctionnement.

L'invention est exposée ci-après plus en détail à l'aide d'un dessin représentant seulement un mode d'exécution.

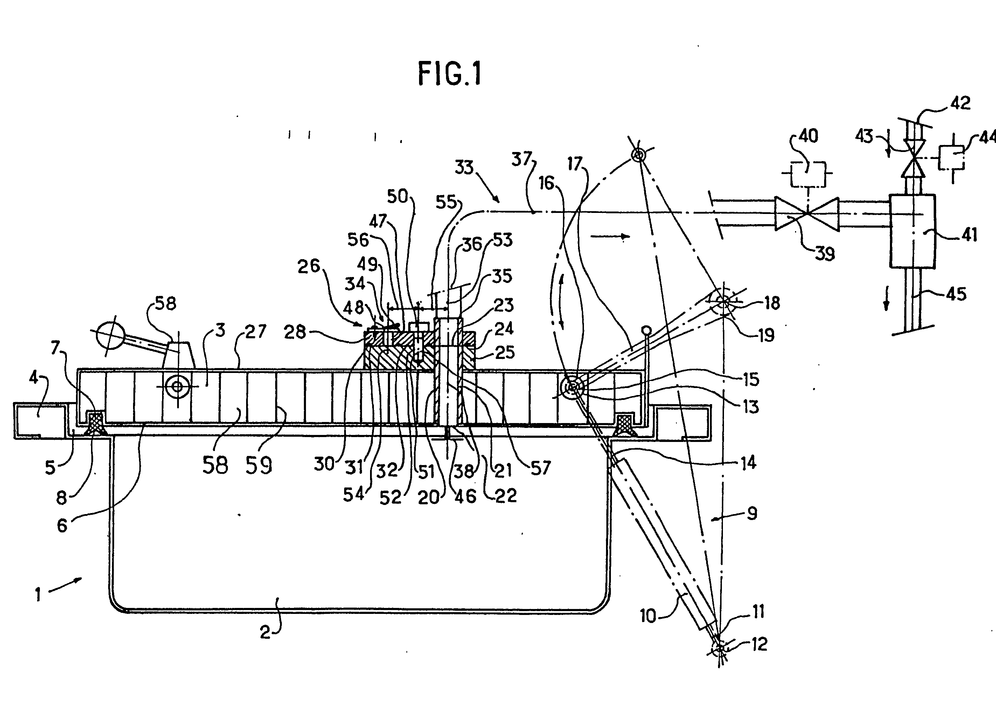

La figure 1 représente une vue en élévation de l'appareil de cuisson conforme à l'invention.

On se réfère à la figure unique.

L'appareil de cuisson 1 comprend, entre autres éléments, une cuve de cuisson 2 et un couvercle rabattable 3. Le dessus de la cuve de cuisson 2 comporte une bordure périphérique 4 délimitant un logement 5 dans lequel est disposé ledit couvercle rabattable 3. Dans le dessous 6 de ce dernier est prévu un logement périphérique 7 dans lequel est inséré un joint d'étanchéité 8 prenant appui sur le dessus 4 de la cuve de cuisson 2 et assurant l'étanchéité entre cette dernière et le couvercle rabattable 3.

Ledit couvercle rabattable 3 est actionné par un mécanisme de commande 9. Celui-ci comporte au moins un vérin 10 dont une des extrémités 11 est solidaire d'une articulation fixe 12 et dont l'extrémité 13 du piston 14 est reliée par un axe 15 à l'une des extrémités 16 d'au moins un levier 17. Ce levier 17 peut pivoter autour d'une articulation fixe 18 située à son autre extrémité 19.

Conformément à l'invention, on pratique dans le couvercle rabattable 3 un alésage vertical 20 unique dans lequel on loge un conduit d'évacuation 21. L'extrémité inférieure 22 de celui-ci débouche dans la cuve de cuisson 2, alors que l'extrémité supérieure 23 est à fleur avec le dessus 24 d'un élément fixe 25 de moyens 26 de sélection de mise sous vide ou sous pression de la cuve de cuisson 2. Cet élément fixe 25 est solidaire du dessus 27 du couvercle rabattable 3. Les moyens de sélection 26 comportent également un élément mobile 28 placé sur le dessus 24 de l'élément fixe 25 et coopérant avec ce dernier. L'étanchéité entre l'élément fixe 25 et l'élément mobile 28 est assurée par au moins un joint d'étanchéité 30 disposé dans au moins un logement 31 réalisé dans la face inférieure 32 de l'élément mobile 28. Ce dernier comporte des moyens de mise sous vide 33 et des moyens de mise sous pression 34.

Les moyens de mise sous vide 33 comportent une bouche d'aspiration 35, solidaire de l'élément mobile 28 et disposée à l'une des extrémités 36 d'un tuyau flexible 37. Lorsque l'appareil de cuisson 1 est utilisé pour une cuisson sous vide, la bouche d'aspiration 35 est située dans le prolongement de l'axe vertical 38 de l'oura 21. Le tuyau flexible 37, pourvu d'un robinet d'arrêt 39 actionné par une électrovanne 40, est relié à un dispositif d'aspiration de mise sous vide 41 sur lequel est branchée une arrivée d'eau 42, pourvue d'un robinet d'arrêt 43 actionné par une seconde électrovanne 44, et duquel part une conduite d'évacuation 45. Pour éviter qu'en phase de mise sous vide de la cuve de cuisson 2 les aliments en vrac soient aspirés, on pourvoit l'extrémité inférieure 22 du conduit 21 d'un déflecteur 46.

Le fonctionnement de cette mise sous vide est le suivant: les deux robinets d'arrêt 39 et 43 sont ouverts. L'eau s'écoulant à travers le dispositif d'aspiration de mise sous vide 41 exerce, à travers le tuyau flexible 37, une succion. Lorsque le vide désiré est atteint, on actionne l'électrovanne 40 et on ferme le robinet d'arrêt 39. Puis, on ferme le robinet d'arrêt 43 par l'intermédiaire de la seconde électrovanne 44.

Les moyens de mise sous pression 34 sont une tuyère 47 réalisée verticalement dans l'élément mobile 28. Cette tuyère 47 de faible diamètre comporte à son extrémité supérieure 48 un clapet de sécurité 49 fonctionnant en cas de surpression dans la cuve de cuisson 2. Lorsque l'appareil de cuisson 1 est utilisé pour une cuisson sous pression, on dispose la tuyère 47 dans le prolongement de l'axe vertical 38 du conduit 21.

Selon un premier mode de réalisation préférentiel l'élément mobile 28 est un disque soumis à un mouvement de rotation A cet effet, on prévoit un axe de rotation 50 autour duquel peut pivoter le disque mobile 28. Avantageusement, cet axe de rotation 50 est une vis dont le corps fileté 51 est vissé dans un trou taraudé 52 réalisé dans l'élément fixe 25. L'axe vertical 53 de la bouche d'aspiration 35 et, par voie de conséquence, l'axe vertical 38 du conduit 21 et l'axe vertical 54 de la tuyère 47 sont à égales distances 55, 56 de l'axe vertical 57 de l'axe de rotation 50. L'axe vertical 53 et l'axe vertical 54 sont situés de part et d'autre de l'axe vertical 57.

Le couvercle rabattable 3 comporte un dessous 6 et un dessus 27 qui sont assemblés d'une façon étanche réalisant, d'une certaine manière, l'isolation pour les dessus, réduisant ainsi, d'une façon sensible, les déperditions pour ce dernier grâce au matelas d'air 58.

D'autre part, ledit couvercle rabattable 3 comporte également, entre le dessous 6 et le dessus 27, un dispositif raidisseur en nid d'abeilles ou caillebotis 59 assurant une planéité du couvercle rabattable 3 et supprimant toutes déformations de ce dernier couvercle rabattable 3 dues aux contraintes de la mise sous vide ou sous pression de la cuve de cuisson 2.

Selon un autre mode de réalisation, l'élément mobile 28 est un tiroir soumis à un mouvement rectiligne pour amener, soit la bouche d'aspiration 35, soit la tuyère 47 dans le prolongement de l'axe vertical 38 du conduit 21.

Le déplacement de l'élément mobile 28 peut se faire manuellement mais on peut également prévoir des moyens mécaniques, électriques, hydrauliques ou autres pour procéder au déplacement automatique de l'élément mobile 28.

Par ailleurs, le couvercle rabattable 3 est pourvu d'un dispositif de verrouillage et/ou de mise à l'air 58.

## Revendications

1. Appareil de cuisson (1) pour cuisines de collectivités comprenant, entre autres, une cuve de cuisson (2) et un couvercle rabattable (3) actionné par un mécanisme de commande (9) et pourvu de moyens de mise sous vide (33) et de moyens de mise sous pression (34) de la cuve de cuisson (2), caractérisé en ce que le couvercle rabattable (3) comporte un conduit d'évacuation unique (21) débouchant, d'une part, à son extrémité inférieure (22) dans la cuve de cuisson (2) et, d'autre part, à son extrémité supérieure (23) dans des moyens de sélection (26) de mise sous vide ou sous pression de la cuve de cuisson (2) constitués par un élément fixe (25) traverse par le conduit (21) et solidaire du dessus (27) du couvercle rabattable (3) et coopérant avec un élément mobile (28) permettant la mise en correspondance sélective du conduit (21), soit avec les moyens de mise sous vide (33), soit avec les moyens de mise sous pression (34), ces derniers étant munis d'un clapet de sécurité (49).

2. Appareil de cuisson selon la revendication 1, caractérisé en ce que les moyens de mise sous vide (33) et les moyens de mise sous pression (34) de l'élément mobile (28) sont disposés l'un (33) ou l'autre (34) dans le prolongement de l'axe vertical (38) du conduit (21).

3. Appareil de cuisson selon les revendications 1 et 2, caractérisé en ce que les moyens de mise sous vide (33) sont une bouche d'aspiration (35) solidaire de l'élément mobile (28) et disposée à l'une des extrémités (36) d'un tuyau flexible (37) pourvu d'un robinet d'arrêt (39) actionné par une électrovanne (40), un dispositif d'aspiration de mise sous vide (31) relié au tuyau flexible (37), une arrivée d'eau (42) pourvue d'un robinet d'arrêt (43) actionné par une seconde électrovanne (44) branchée sur le dispositif (31) et une conduite d'évacuation (45).

4. Appareil de cuisson selon les revendications 1 et 2, caractérisé en ce que les moyens de mise sous pression (34) sont une tuyère (47) de faible diamètre réalisée verticalement dans l'élément mobile (28) et comportant à son extrémité supérieure (48) un clapet de sécurité (49).

5. Appareil de cuisson selon la revendication 1, caractérisé en ce que l'élément mobile (28) est un disque soumis à un mouvement de rotation autour d'un axe de rotation (50) en forme d'une vis dont le corps fileté (51) est vissé dans un trou taraudé (52) réalisé dans l'élément fixe (25).

6. Appareil de cuisson selon les revendications 3 et 5, caractérisé en ce que l'entre-axe entre l'axe vertical (38) du conduit (21) et l'axe vertical (57) de l'axe de rotation (50) est égal à la distance (55) entre l'axe vertical (53) de la bouche d'aspiration (35) et l'axe vertical (57) de l'axe de rotation (50).

7. Appareil de cuisson selon les revendications 4 à 6, caractérisé en ce que la distance (56) entre l'axe vertical (54) de la tuyère (47) et l'axe vertical (57) de l'axe de rotation (50) est égale à la distance (55) séparant l'axe vertical (53) de la bouche d'aspiration (35) dudit axe vertical (57) de l'axe de rotation (50).

8. Appareil de cuisson selon les revendications 6 et 7, caractérisé en ce que l'axe vertical (38) du conduit (21) et l'axe vertical (54) de la tuyère (47) sont situés de part et d'autre de l'axe vertical (57) de l'axe de rotation (50).

9. Appareil de cuisson selon la revendication 1, caractérisé en ce que l'élément mobile (28) est un tiroir soumis à un mouvement rectiligne.

**Patentansprüche**

1. Kochvorrichtung (1) für Gemeinschaftsküchen umfassend, unter andern, einen Kochkessel (2) und einen herunterklappbaren Deckel (3), der über einen Bedienungsmechanismus (9) betätigt wird und mit Mitteln zur Untervakuumstellung (33) und Mitteln zur Unterdruckstellung (34) des Kochkessels (2) versehen ist, dadurch gekennzeichnet, daß der herunterklappbare Deckel (3) eine einzige Abfuhrleitung (21) umfaßt, die, einerseits, an ihrem unteren Ende (22), in den Kochkessel (2) und, andererseits, an ihrem oberen Ende (23), in Mittel zum Wählen (26) der Untervakuumstellung oder der Unterdruckstellung des Kochkessels (2) mündet, welche bestehen aus einem festen Bestandteil (25), der von der Leitung (21) durchquert und fest mit dem Oberteil (27) des herunterklappbaren Deckel (3) verbunden ist und zusammenarbeitet mit einem beweglichen Bestandteil (28), der die selektive Übereinstimmung der Leitung (21) erlaubt entweder mit den sonstigen Mitteln zur Untervakuumstellung (33) oder mit den Mitteln zur Unterdruckstellung (34), wobei diese letzten mit einer Sicherheitsklappe (49) versehen sind.

2. Kochvorrichtung nach Anspruch 1, dadurch gekennzeichnet, daß die Mittel zur Untervakuumstellung (33) und die Mittel zur Unterdruckstellung (34) des beweglichen Bestandteils (28) die einen (33) oder die anderen (34) in der Verlängerung der Vertikalachse (38) der Leitung (21) angeordnet sind.

3. Kochvorrichtung nach Ansprüchen 1 und 2, dadurch gekennzeichnet, daß die Mittel zur Untervakuumstellung (33) eine Ansaugöffnung (35) sind, die fest mit dem beweglichen Bestandteil (28) verbunden und an einem der Enden (36) eines Schlauches (37) angeordnet ist, der versehen ist mit einem durch ein Elektromagnetventil (40) betätigten Absperrhahn (39), einer mit dem Schlauch (37) verbundenen Ausaugvorrichtung zur Untervakuumstellung (41), einem an der Vorrichtung (41) angeschlossenen Wassereinlaß (42), der mit einem durch ein zweites Elektromagnetventil (44) betätigten Absperrhahn (43) und einer Abfuhrleitung (45) versehen ist.

4. Kochvorrichtung nach Ansprüchen 1 und 2, dadurch gekennzeichnet, daß die Mittel zur Unterdruckstellung (34) eine senkrecht in beweglichen Bestandteil (28) liegende Düse (47) mit geringem Durchmesser sind, die an ihrem oberen Ende (48) eine Sicherheitsklappe (49) umfaßt.

5. Kochvorrichtung nach Anspruch 1, dadurch gekennzeichnet, daß der bewegliche Bestandteil (28) eine Scheibe ist, die einer Drehbewegung um eine Drehwelle (50) in der Form einer Schraube, deren Körper (51) mit Außengewinde in einem gebohrten Loch (52) in festen Bestandteil (25) eingeschraubt ist, ausgesetzt ist.

6. Kochvorrichtung nach Ansprüchen 3 und 5, dadurch gekennzeichnet, daß der Abstand zwischen der Vertikalachse (38) der Leitung (21) und der Vertikalachse (57) der Drehwelle (50) gleich dem Abstand (55) zwischen der Vertikalachse (53) der Ansaugöffnung (35) und der Vertikalachse (57) der Drehwelle (50) ist.

7. Kochvorrichtung nach Ansprüchen 4 bis 6, dadurch gekennzeichnet, daß der Abstand (56) zwischen der Vertikalachse (54) der Düse (47) und der Vertikalachse (57) der Drehwelle (50) gleich dem Abstand (55) zwischen der Vertikalachse (53) der Ansaugöffnung (35) und der genannten Vertikalachse (57) der Drehwelle (50) ist.

8. Kochvorrichtung nach Ansprüchen 6 und 7, dadurch gekennzeichnet, daß sich die Vertikalachse (38) der Leitung (21) und die Vertikalachse (54) der Düse (47) an beiden Seiten der Vertikalachse (57) der Drehwelle (50) befinden.

9. Kochvorrichtung nach Anspruch 1, dadurch gekennzeichnet, daß der bewegliche Bestandteil (28) ein einer geradlinigen Bewegung ausgesetzter Schieber ist.

## Claims

1. Cooking apparatus (1) for communal kitchens comprising, among others, a cooking vessel (2) and a hinged cover (3) actuated by a control mechanism (9) and provided with means for the putting under vacuum (33) and means for the putting under pressure (34) of the cooking vessel (2), characterized in that the hinged cover (3) comprises a single exhaust conduit (21) ending, on the one hand, at its lower end (22), into the cooking vessel (2) and, on the other hand, at its upper end (23), into means for the selection (26) of the putting under vacuum or the putting under pressure of the cooking vessel (2) comprised of a fixed element (25) crossed through by the conduit (21) and integral with the top (27) of the hinged cover (3) and co-operating with a movable element (28) allowing the selective matching of the conduit (21) either with the other means for the putting under vacuum (33) or with the means for the putting under pressure (34), these latter being provided with a relief-valve (49).

2. Cooking apparatus according to claim 1, characterized in that the means for the putting under vacuum (33) and the means for the putting under pressure (34) of the movable element (28) are arranged the one (33) or the other (34) in the extension of the vertical axis (38) of the conduit (21).

3. Cooking apparatus according to claims 1 and 2, characterized in that the means for the putting under vacuum (33) are a suction opening (35) integral with the movable element (28) and arranged at one of the ends (36) of a hose (37) provided with a stopcock (39) actuated by an electromagnetic sluice gate (40), a suction device for the putting under vacuum (41) connected to the hose (37), a water inlet (42) provided with a stopcock (43) actuated by a second electromagnetic sluice gate (44) connected to the device (41) and an exhaust conduit (45).

4. Cooking apparatus according to claims 1 and 2, characterized in that the means for the putting under pressure (34) are a small-diameter nozzle (47) vertically provided in the movable element (28) and comprising, at its upper end (48), a relief-valve (49).

5. Cooking apparatus according to claim 1, characterized in that the movable element (28) is a disc subject to a rotary movement about a rotating shaft (50) in the form of a screw the threaded body (51) of which is screwed into a tapped hole (52) provided in the fixed element (25).

6. Cooking apparatus according to claims 3 and 5, characterized in that the distance between the vertical axis (38) of the conduit (21) and the vertical axis (57) of the rotating shaft (50) is equal to the distance (55) between the vertical axis (53) of the suction opening (35) and the vertical axis (57) of the rotating shaft (50).

7. Cooking apparatus according to claims 4 to 6, characterized in that the distance (56) between the vertical axis (54) of the nozzle (47) and the vertical axis (57) of the rotating shaft (50) is equal to the distance (55) separating the vertical axis (53) of the suction opening (35) from said vertical axis (57) of the rotating shaft (50).

8. Cooking apparatus according to claims 6 and 7, characterized in that the vertical axis (38) of the conduit (21) and the vertical axis (54) of the nozzle (47) are located on both sides of the vertical axis (57) of the rotating shaft (50).

9. Cooking apparatus according to claim 1, characterized in that the movable element (28) is a slide subject to a rectilinear movement.

# FIG.1

EP 0 249 572 B1